# EUROPÄISCHE PATENTSCHRIFT

(11) **EP 2 310 337 B1**
(45) Veröffentlichungstag und Bekanntmachung des Hinweises auf die Patenterteilung: **02.11.2016**
(21) Anmeldenummer: 09781050.1
(22) Anmeldetag: 24.07.2009
(51) Int. Cl.: C04B 35/468, H01C 7/02, C04B 37/00

(54) **HEIZUNGSVORRICHTUNG UND VERFAHREN ZUR HERSTELLUNG EINER HEIZUNGSVORRICHTUNG**
HEATING DEVICE AND METHOD FOR PRODUCING A HEATING DEVICE
DISPOSITIF DE CHAUFFAGE ET PROCÉDÉ DE PRODUCTION D'UN DISPOSITIF DE CHAUFFAGE

(30) Priorität: 07.08.2008 DE 102008036836
(43) Veröffentlichungstag der Anmeldung: 20.04.2011
(73) Patentinhaber: Epcos AG, 81669 München (DE)
(72) Erfinder: IHLE, Jan, 8071 Grambach (AT); KAHR, Werner, A-8530 Deutschlandsberg (AT); STEINBERGER, Bernhard, A-8042 Graz (AT)
(74) Vertreter: Epping - Hermann - Fischer
(86) Internationale Anmeldenummer: PCT/EP2009/059578
(87) Internationale Veröffentlichungsnummer: WO 2010/015531

(56) Entgegenhaltungen:
- EP-A1- 2 322 012
- DE-A1- 19 818 375
- JP-A- 55 146 905
- JP-A- H05 251 206
- US-A- 4 644 133
- US-A- 4 834 052
- US-A- 5 756 215
- US-A- 6 147 330
- US-A1- 2002 130 318
- US-B1- 6 396 028

## Beschreibung

Die Erfindung betrifft einen Formkörper, eine Heizungsvorrichtung, die den Formkörper umfasst, und ein Verfahren zur Herstellung eines Formkörpers.

Medien, beispielsweise Fluide, können mittels eines thermischen Kontakts mit Materialien, die einen positiven Temperaturkoeffizienten des elektrischen Widerstands haben (PTC-Materialien), erhitzt werden. Solche PTC-Materialien können bisher als Scheiben oder Rechteckelemente ausgeformt werden, die aus einem PTC-Material bestehen.

Die Patentanmeldung US 6,147,330 offenbart ein PTC-Thermistor-Element mit einem Hauptkörper, der eine Schichtstruktur mit einer dünneren und einer dickeren Schicht aufweist, wobei die Schichtstruktur von Elektroden umgeben wird, welche auf den voneinander abgewandten Außenoberflächen der beiden Schichten angeordnet sind.

Eine zu lösende Aufgabe besteht darin, eine Heizungsvorrichtung umfassend einen Formkörper bereitzustellen, wobei der Formkörper eine hohe mechanische Festigkeit und chemische Stabilität aufweist und ein Material mit PTC-Eigenschaften umfasst. Diese Aufgabe wird durch eine Heizungsvorrichtung gemäß dem Patentanspruch 1 gelöst. Weitere Ausführungsformen der Heizungsvorrichtung und ein Verfahren zur Herstellung einer Heizungsvorrichtung sind Gegenstand weiterer Patentansprüche.

Die vorliegende Erfindung betrifft eine Heizungsvorrichtung zum Beheizen eines Mediums, umfassend einen Formkörper, umfassend
- einen ersten Bereich, der ein elektrokeramisches Material mit positivem Temperaturkoeffizienten des elektrischen Widerstands und eine Perowskitstruktur aufweist, wobei der erste Bereich des Formkörpers mit zwei elektrischen Kontaktierungen und zur Erzeugung eines Stromflusses in dem ersten Bereich des Formkörpers versehen ist,
- einen zweiten Bereich, der ein strukturkeramisches Material, umfassend eine Oxidkeramik aufweist, und
- einen Grenzbereich zwischen dem ersten Bereich (10) und dem zweiten Bereich, in dem das elektrokeramische Material und das strukturkeramische Material miteinander versintert sind, wobei erster und zweiter Bereich formschlüssig aneinander angeordnet sind, und wobei der erste Bereich und der zweite Bereich als Rohr ausgeformt sind und wobei der erste Bereich den zweiten Bereich umgibt.

Beschrieben wird ein Formkörper der einen ersten Bereich, einen zweiten Bereich und einen Grenzbereich zwischen dem ersten Bereich und dem zweiten Bereich umfasst. Der erste Bereich weist ein elektrokeramisches Material mit positiven Temperaturkoeffizienten des elektrischen Widerstands auf und der zweite Bereich weist ein strukturkeramisches Material auf. In dem Grenzbereich sind das elektrokeramische Material und das strukturkeramische Material miteinander versintert. Damit wird ein einteiliger Formkörper bereitgestellt, in dem ein Materialverbund aus einem elektrokeramischen Material und einem strukturkeramischen Material vorhanden ist. Somit können rein formgebende oder formgebende und funktionelle Komponenten in einem Formkörper vereinigt werden.

Das elektrokeramische Material des ersten Bereichs des Formkörpers der erfindungsgemäßen Heizungsvorrichtung kann eine Perowskitstruktur aufweisen. Das elektrokeramische Material kann die Struktur Ba_{1-x-y}MₓD_{y}Ti_{1-a-b}NₐMn_{b}O₃ aufweisen. Dabei ist x ausgewählt aus dem Bereich 0 bis 0,5, y aus dem Bereich 0 bis 0,01, a aus dem Bereich 0 bis 0,01, und b aus dem Bereich 0 bis 0,01. M kann ein zweiwertiges Kation umfassen, D einen drei- oder vierwertigen Donor und N ein fünf- oder sechswertige Kation. M kann beispielsweise Calcium, Strontium oder Blei sein, D kann beispielsweise Yttrium oder Lanthan sein. Beispiele für N sind Niob oder Antimon. Das elektrokeramische Material kann metallische Verunreinigungen umfassen, die mit einem Gehalt von weniger als 10 ppm vorhanden sind. Der Gehalt an metallischen Verunreinigungen ist so gering, dass die PTC-Eigenschaften des elektrokeramischen Materials nicht beeinflusst werden.

Das elektrokeramische Material in dem Formkörper der erfindungsgemäßen Heizungsvorrichtung kann weiterhin eine Curie-Temperatur aufweisen, die einen Bereich von -30°C bis 340°C umfasst. Weiterhin kann das elektrokeramische Material einen spezifischen Widerstand bei 25°C aufweisen, der in einem Bereich von 3 Ωcm bis 100000 Qcm liegt.

Durch die Verwendung eines elektrokeramischen Materials mit positiven Temperaturkoeffizienten des elektrischen Widerstands umfasst der Formkörper den ersten Bereich, der sich durch Anlegen einer Spannung erwärmt und diese Wärme an die Umgebung abgeben kann. Dabei weist dieser Bereich ein selbst regulierendes Verhalten auf. Erreicht die Temperatur in dem ersten Bereich einen kritischen Wert, steigt auch der Widerstand in diesem Bereich, sodass weniger Strom durch den ersten Bereich fließt. Damit wird ein weiteres Aufheizen des ersten Bereichs verhindert, sodass keine zusätzliche elektronische Regelung der Heizleistung bereitgestellt werden muss.

Das strukturkeramische Material des zweiten Bereichs des Formkörpers der erfindungsgemäßen Heizungsvorrichtung kann eine Oxidkeramik umfassen. Die Oxidkeramik kann aus einer Gruppe ausgewählt sein, die ZrO₂, Al₂O₃ und MgO umfasst. Der Einsatz weiterer Oxidkeramiken ist ebenso möglich. Diese Oxidkeramiken weisen eine hohe mechanische Festigkeit beispielsweise gegenüber Abrasion sowie eine hohe chemische Resistenz beispielsweise gegenüber Säuren und Laugen auf. Weiterhin sind sie lebensmittelecht und können somit bedenkenlos in Kontakt mit Materialien, beispielsweise zu beheizende Medien, kommen, die nicht kontaminiert werden dürfen.

Beispielsweise kann der zweite Bereich des Formkörpers der erfindungsgemäßen Heizungsvorrichtung so ausgeformt sein, dass er an Stellen vorhanden ist, wo er in Kontakt mit dem zu beheizenden Medium ist und/oder wo eine hohe Abrasion auftritt.

Somit wird ein Formkörper bereitgestellt, in dem eine Trennung von der elektrischen Funktion in dem ersten Bereich und der mechanisch stabilen konstruktiven Komponente in dem zweiten Bereich realisiert wird.

Weiterhin kann der Formkörper der erfindungsgemäßen Heizungsvorrichtung mittels Spritzguss hergestellt, und damit in jeder geometrischen Form, die für die jeweilige konstruktive Umgebung nötig ist, ausgeformt sein. Der erste Bereich des Formkörpers kann so ausgeformt sein, dass er an konstruktiv schwer zugänglichen Bereichen angeordnet werden kann. Somit kann beispielsweise ein Medium effizient mit sehr kurzen Aufheizzeiten und niedrigen Heizleistungen beheizt werden.

Weiterhin können der erste Bereich, der zweite Bereich und der Grenzbereich thermische Ausdehnungskoeffizienten aufweisen, die sich um weniger als 2*10⁻⁶/K voneinander unterscheiden. Damit wird eine Materialkombination gewählt, die in dem Grenzbereich zwischen dem ersten Bereich und dem zweiten Bereich geeignete Phasen aufweist. "Phasen" können Mischkristalle aus den elektrokeramischen und den strukturkeramischen Materialien umfassen. Solche Mischkristalle können beispielsweise Barium-Blei-Zirkontitanate sein, wenn als strukturkeramisches Material Zirkonoxid gewählt wird. Bei Al₂O₃ oder MgO als strukturkeramisches Material können die Mischkristalle entsprechend Barium-Aluminium-Titanat oder Barium-Magnesium-Titanat sein. Die Mischkristalle gehen je nach Abstand zu dem ersten Bereich und dem zweiten Bereich fließend in das elektrokeramische Material und das strukturkeramische Material über. "Geeignet" meint in diesem Zusammenhang, dass der Grenzbereich ähnliche Ausdehnungskoeffizienten wie die angrenzenden Bereiche aufweist. Die Ausdehnungskoeffizienten der verwendeten Materialien im ersten Bereich, zweiten Bereich und dem Grenzbereich können so aneinander angepasst sein, dass es bei Erwärmung zu keiner Bildung von Spannungsrissen kommt.

Weiterhin kann der Grenzbereich des Formkörpers die Diffusion von Bestandteilen des elektrokeramischen Materials und des strukturkeramischen Materials hemmen. Bestandteile können beispielsweise Anionen oder Kationen sein, die in dem elektrokeramischen Material oder dem strukturkeramischen Material vorhanden sind. Damit wird eine gegenseitige Beeinträchtigung der funktionellen und/oder strukturellen Eigenschaften des ersten und zweiten Bereichs vermieden.

Bei der erfindungsgemäßen Heizungsvorrichtung ist der erste Bereich des Formkörpers mit zwei elektrischen Kontaktierungen zur Erzeugung eines Stromflusses in dem ersten Bereich des Formkörpers versehen.
Mit einer Heizungsvorrichtung, die einen ersten funktionellen Bereich und einen zweiten konstruktiven Bereich umfasst, kann die Trennung von zu beheizendem Medium und dem elektrokeramischen Material realisiert werden. Damit können die mechanisch oder auch abrasiv belasteten Bereiche der Heizungsvorrichtung von der elektrischen Funktion entkoppelt sein. Durch die Verwendung des strukturkeramischen Materials in dem zweiten Bereich können auch Medien beheizt werden, die nicht kontaminiert werden dürfen. Eine Lösung von Bestandteilen des ersten Bereichs durch das zu beheizende Medium wird ebenso verhindert, indem der zweite Bereich zwischen dem ersten Bereich und dem zu beheizenden Medium vorhanden ist.

Es wird weiterhin ein Verfahren zur Herstellung einer Heizungsvorrichtung umfassend einen Formkörper bereitgestellt. Das Verfahren umfasst die Verfahrensschritte
A) Bereitstellen eines elektrokeramischen Ausgangsmaterials,
B) Bereitstellen eines strukturkeramischen Ausgangsmaterials,
C) Herstellen eines Grünkörpers, der einen das elektrokeramische Ausgangsmaterial umfassenden ersten Bereich und einen das strukturkeramische Ausgangsmaterial umfassenden zweiten Bereich umfasst, und
D) Sintern des Grünkörpers zur Herstellung des Formkörpers, wobei das elektrokeramische Ausgangsmaterial in ein elektrokeramisches Material mit positiven Temperaturkoeffizienten des elektrischen Widerstands überführt wird.

Mit diesem Verfahren kann in einem Formgebungsprozess ein einteiliger Formkörper bereitstellt werden, der Bereiche mit funktionellen und mit konstruktiven Eigenschaften aufweist. Durch die gemeinsame Herstellung dieser Bereiche wird vermieden, mehrere einzelne Bauteile formschlüssig herzustellen und aneinander zu befestigen. Durch die gemeinsame Formgebung sowie das gemeinsame Entbindern und Sintern des elektrokeramischen Ausgangsmaterials und des strukturkeramischen Ausgangsmaterials werden in einem Formkörper zumindest zwei Bereiche gebildet, die die gewünschten elektrischen und mechanischen Eigenschaften aufweisen, formschlüssig aneinander angeordnet und miteinander versintert sind.

In dem Verfahrensschritt A) kann ein elektrokeramisches Ausgangsmaterial bereitgestellt werden, das eine Struktur aufweist, die die Formel Ba_{1-x-y}MₓD_{y}Ti_{1-a-b}NₐMn_{b}O₃ aufweist. Dabei umfasst x den Bereich 0 bis 0,5, y den Bereich 0 bis 0,01, a den Bereich 0 bis 0,01, b den Bereich 0 bis 0,01, M ein zweiwertiges Kation, D einen drei- oder vierwertigen Donor und N ein fünf- oder sechswertiges Kation. Dieses Ausgangsmaterial ist in ein elektrokeramisches Material mit positivem Temperaturkoeffizienten des elektrischen Widerstands überführbar und weist eine Perowskitstruktur auf.

Um das elektrokeramische Ausgangsmaterial, mit weniger als 10 ppm metallischen Verunreinigungen herzustellen, kann es mit Werkzeugen hergestellt werden, die eine harte Beschichtung aufweisen, um einen Abrieb zu vermeiden. Eine harte Beschichtung kann beispielsweise aus Wolframcarbid bestehen. Alle Oberflächen der Werkzeuge, die mit dem elektrokeramischen Ausgangsmaterial in Berührung kommen, können mit der harten Beschichtung beschichtet sein.

Auf diese Weise kann ein elektrokeramisches Ausgangsmaterial, das durch Sintern in ein elektrokeramisches PTC-Material überführt werden kann, mit einer Matrix vermischt und zu einem Granulat verarbeitet werden. Dieses Granulat kann zur Weiterverarbeitung spritzgegossen werden.

Die Matrix, in die das elektrokeramische Ausgangsmaterial eingelagert ist und die einen geringeren Schmelzpunkt aufweist, als das elektrokeramische Ausgangsmaterial, kann dabei einen Anteil von weniger als 20 Massen% gegenüber dem elektrokeramischen Ausgangsmaterial aufweisen. Die Matrix kann ein Material umfassen, das aus einer Gruppe ausgewählt ist, die Wachs, Harze, Thermoplaste und wasserlösliche Polymere umfasst. Weitere Zusätze, wie Antioxidantien oder Weichmacher können ebenfalls vorhanden sein.

Weiterhin kann im Verfahrensschritt B) das strukturkeramische Ausgangsmaterial mit einer Matrix vermischt und zu einem Granulat verarbeitet werden, das zu Weiterverarbeitung spritzgegossen werden kann.

Die Matrix, in die das strukturkeramische Ausgangsmaterial eingelagert ist und die einen geringeren Schmelzpunkt aufweist, als das strukturkeramische Ausgangsmaterial, kann dabei einen Anteil von weniger als 20 Massen% gegenüber dem strukturkeramischen Ausgangsmaterial aufweisen. Die Matrix kann ein Material umfassen, das aus einer Gruppe ausgewählt ist, die Wachs, Harze, Thermoplaste und wasserlösliche Polymere umfasst. Weitere Zusätze, wie Antioxidantien oder Weichmacher können ebenfalls vorhanden sein.

Während des Sinterns im Verfahrensschritt D) werden das elektrokeramische Ausgangsmaterial in das elektrokeramische Material des Formkörpers, das einen positiven Temperaturkoeffizienten des elektrischen Widerstands aufweist, und das strukturkeramische Ausgangsmaterial in das strukturkeramische Material des Formkörpers überführt und die Matrix entfernt.

Als strukturkeramisches Ausgangsmaterial kann ein Material gewählt werden, das durch Sintern in eine Oxidkeramik überführt werden kann, die ausgewählt ist aus einer Gruppe, die ZrO₂, Al₂O₃ und MgO umfasst.

Bei der Auswahl des elektrokeramischen Ausgangsmaterials und des strukturkeramischen Ausgangsmaterials sollte hinsichtlich der Formgebungseigenschaften und der Sinterbedingungen eine Abstimmung erfolgen. Beispielsweise sollten die Materialien bei ähnlichen Maximaltemperaturen, Haltezeiten und Abkühlgradienten gesintert werden. Um eine gemeinsame Sinterung des elektrokeramischen Ausgangsmaterials und des strukturkeramischen Ausgangsmaterials im gleichen Prozess zu realisieren, kann bei dem elektrokeramischen Ausgangsmaterial die Sintertemperatur durch geeignete Maßnahmen erhöht und bei dem strukturkeramischen Ausgangsmaterial abgesenkt werden. Geeignete Maßnahmen sind beispielsweise eine Zugabe von Oxiden mit Calcium, Strontium, Blei oder Zirkonium zu dem elektrokeramischen Ausgangsmaterial beziehungsweise eine Zugabe von Oxiden mit Elementen aus der Gruppe der Alkalien, Erdalkalien, Titanoxid oder Siliziumoxid, beispielsweise Oxide mit Yttrium, Calcium oder Cer, zu dem strukturkeramischen Ausgangsmaterial. Damit können die physikalischen Parameter des elektrokeramischen Ausgangsmaterials und des strukturkeramischen Ausgangsmaterials so modifiziert werden, dass sich für die Verarbeitung der beiden Materialien ein gemeinsames Prozessfenster erzielen lässt.

In den Verfahrensschritten A) und B) können beispielsweise das elektrokeramische Ausgangsmaterial und das strukturkeramische Ausgangsmaterial so ausgewählt werden, dass sie Ausdehnungskoeffizienten aufweisen, die sich um weniger als 2*10⁻⁶/K unterscheiden. Bei der gemeinsamen Sinterung im Verfahrensschritt D) wird zwischen den beiden Materialien ein Grenzbereich gebildet, in dem das elektrokeramische Material und das strukturkeramische Material miteinander versintert sind. Dazu sollten in dem Grenzbereich während der Sinterung keine übermäßigen Anteile an niedrig schmelzenden Eutektika gebildet werden. Somit wird eine ausreichende Formstabilität des Formkörpers gewährleistet.

In dem Verfahrensschritt C) kann ein Formgebungsverfahren verwendet werden, das ausgewählt ist aus Spritzguss, Mehrlagenpressen und Foliengießen. Mittels Spritzguss können beispielsweise Formkörper in beliebigen Ausformungen bereitgestellt werden, die an die jeweiligen Bedingungen und konstruktiven Umgebungen angepasst werden können.

Anhand der Figuren und Ausführungsbeispiele soll die Erfindung noch näher erläutert werden.
- Figur 1: zeigt die schematische Seitenansicht einer Ausführungsform einer Heizungsvorrichtung,
- Figur 2: zeigt die schematische, perspektivische Ansicht einer zweiten Ausführungsform einer Heizungsvorrichtung.

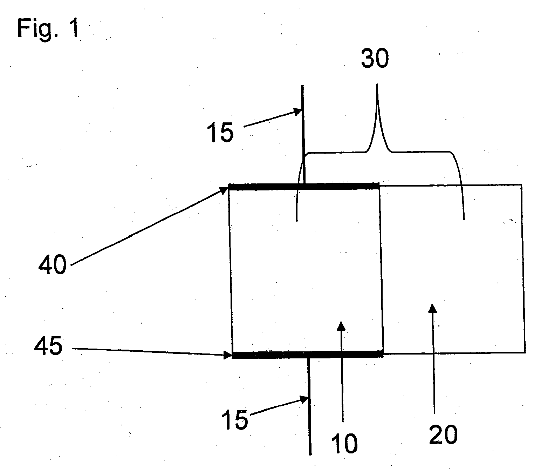

Figur 1 zeigt die schematische Seitenansicht einer ersten Ausführungsform einer Heizungsvorrichtung. Diese umfasst einen ersten Bereich 10 und einen zweiten Bereich 20, die zusammen den Formkörper 30 bilden. An dem ersten Bereich 10 sind zwei elektrische Kontaktierungen 40 und 45 angeordnet, die über elektrische Anschlüsse 15 kontaktiert werden können. Der erste Bereich 10 und der zweite Bereich 20 sind miteinander versintert, so dass eine zusätzliche Befestigung der beiden Bereiche aneinander nicht nötig ist und der Formkörper 30 einteilig ausgeformt ist.

Der Bereich 10 umfasst ein elektrokeramisches Material der Struktur Ba_{1-x-y}MₓD_{y}Ti_{1-a-b}NₐMn_{b}O₃, das weiterhin mit einer seltenen Erde, wie beispielsweise Calcium, Strontium, Blei oder Zirkonium dotiert sein kann. Mit diesem elektrokeramischen Material weist der erste Bereich einen positiven Temperaturkoeffizienten des elektrischen Widerstands auf.

Der zweite Bereich 20 kann ein strukturkeramisches Material, beispielsweise eine Oxidkeramik umfassen, die ebenfalls mit Elementen aus der Gruppe der Alkalien, Erdalkalien, Titan oder Silizium, beispielsweise Yttrium, Calcium oder Cer dotiert sein kann.

Damit werden in einem einteiligen Formkörper 30 die mechanischen und chemischen Belastbarkeiten des strukturkeramischen Materials mit der elektrischen Funktionalität des elektrokeramischen Materials kombiniert. Bei der Herstellung des Formkörpers 30 wird ein gemeinsamer Fügeprozess (CIM, Ceramic Injection Molding) verwendet, um die in Bezug auf die thermischen Ausdehnungskoeffizienten abgestimmten elektrokeramischen und strukturkeramischen Materialien zu verbinden. Die thermischen Ausdehnungskoeffizienten müssen dabei über den gesamten Temperaturbereich von 1260° C, wo eine Mischung aus festem BaTiO₃ und flüssigem BaTiSiO₅ vorliegt, bis Raumtemperatur, also auch unterhalb der Flüssigphasensintertemperatur, Unterschiede aufweisen, die kleiner als 2*10⁻⁶/K sind, was durch die entsprechenden Dotierungen der Materialien erreicht werden kann. Flüssigphasen der elektrokeramischen und strukturkeramischen Materialien können in Abhängigkeit der Zusammensetzung bei Temperaturen von 940°C bis 1670°C auftreten.

Im kritischen Temperaturbereich mit großen Spannungen sollten die keramischen Materialien langsam, beispielsweise mit 0,2°C pro Minute, abgekühlt werden. Der kritische Temperaturbereich kann dabei zwischen Raumtemperatur und 1260°C liegen.

Um Sinterfähigkeiten bis zu Dichten von 99% des strukturkeramischen Materials zu erreichen, können Korngrößen von weniger als 1 µm vor dem Sinterprozess beziehungsweise Sinterhilfsmittel, wie beispielsweise SiO₂, TiO₂ oder FeO verwendet werden. Hiermit sind Sintertemperaturen von weniger als 1400° C bei Sinterzeiten von weniger als 120 Minuten möglich.

Wenn die elektrokeramischen Materialien Bleianteile umfassen, können sehr niedrige Sintertemperaturen unter 1300°C angewendet werden, um die Anreicherung des Bleis im strukturkeramischen Material zu verhindern.

Binderanteile in dem elektrokeramischen und/oder strukturkeramischen Material sowie Press- beziehungsweise Fügekräfte werden auf ähnliche Schrumpfwerte während der Entbinderung und Sinterung eingestellt, was zu Binderanteilen von über 1 Gew-% führt.

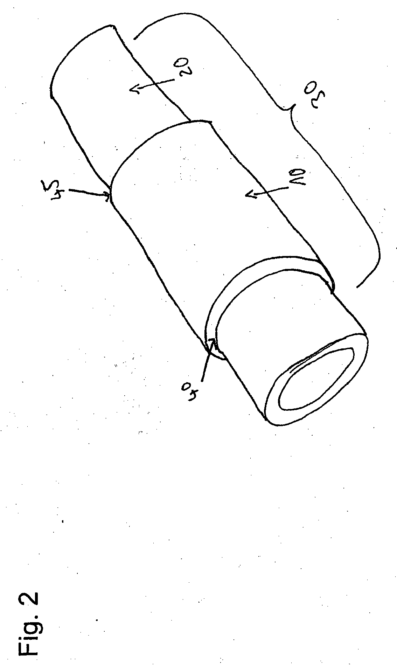

Figur 2 zeigt die schematische perspektivische Ansicht einer weiteren Ausführungsform der Heizungsvorrichtung. Hier ist der erste Bereich 10 und der zweite Bereich 20, die zusammen den Formkörper 30 bilden, als Rohr ausgeformt, wobei der erste Bereich 10 den zweiten Bereich 20 umgibt. An den beiden Stirnseiten des ersten Bereichs 10 sind elektrische Kontaktierungen 40 und 45 vorhanden. Die elektrischen Anschlüsse 15, über die die Kontaktierungen 40 und 45 kontaktiert werden, sind hier der Übersicht halber nicht gezeigt. Durch ein solches Rohr kann beispielsweise ein Medium geleitet werden, das bei Anlegen einer Spannung durch den ersten Bereich beheizt wird, während der zweite Bereich 20 für die mechanische und chemische Stabilität des Formkörpers 30 während des Fließens des Mediums durch das Rohr sorgt. Eine Kontaminierung des zu beheizenden Mediums oder eine Zerstörung des ersten Bereichs durch das Medium ist gehemmt, da der zweite Bereich 20 zwischen dem zu beheizenden Medium und dem ersten Bereich 10 vorhanden ist.

### Bezugszeichenliste

- 10: erster Bereich
- 15: elektrischer Anschluss
- 20: zweiter Bereich
- 30: Formkörper
- 40: elektrische Kontaktierung
- 45: elektrische Kontaktierung

## Patentansprüche

1. Heizungsvorrichtung zum Beheizen eines Mediums, umfassend einen Formkörper (30), umfassend
- einen ersten Bereich (10), der ein elektrokeramisches Material mit positivem Temperaturkoeffizienten des elektrischen Widerstands und eine Perowskitstruktur aufweist, wobei der erste Bereich (10) des Formkörpers (30) mit zwei elektrischen Kontaktierungen (40) und (45) zur Erzeugung eines Stromflusses in dem ersten Bereich (10) des Formkörpers (30) versehen ist,
- einen zweiten Bereich (20), der ein strukturkeramisches Material, umfassend eine Oxidkeramik aufweist, und
- einen Grenzbereich zwischen dem ersten Bereich (10) und dem zweiten Bereich (20), in dem das elektrokeramische Material und das strukturkeramische Material miteinander versintert sind, wobei erster und zweiter Bereich formschlüssig aneinander angeordnet sind, und
wobei der erste Bereich (10) und der zweite Bereich (20) als Rohr ausgeformt sind und wobei der erste Bereich (10) den zweiten Bereich (20) umgibt.

2. Heizungsvorrichtung nach dem vorhergehenden Anspruch, wobei das elektrokeramische Material die Struktur Ba_{1-x-y}MₓD_{y}Ti_{1-a-b}NₐMn_{b}O₃ aufweist, wobei x = 0 bis 0,5, y = 0 bis 0,01, a = 0 bis 0,01, b = 0 bis 0,01, M ein zweiwertiges Kation umfasst, D einen drei- oder vierwertigen Donor umfasst und N ein fünf- oder sechswertiges Kation umfasst.

3. Heizungsvorrichtung nach einem der vorhergehenden Ansprüche, wobei das elektrokeramische Material eine Curie-Temperatur aufweist, die einen Bereich von -30°C bis 340°C umfasst.

4. Heizungsvorrichtung nach einem der vorhergehenden Ansprüche, wobei das elektrokeramische Material einen
spezifischen Widerstand bei 25°C aufweist, der in einem Bereich von 3 Ωcm bis 100000 Ωcm liegt.

5. Heizungsvorrichtung nach einem der vorhergehenden Ansprüche, wobei die Oxidkeramik aus einer Gruppe ausgewählt ist, die ZrO₂, Al₂O₃ und MgO umfasst.

6. Heizungsvorrichtung nach einem der vorhergehenden Ansprüche, wobei der erste Bereich (10), der zweite Bereich (20) und der Grenzbereich thermische Ausdehnungskoeffizienten aufweisen, die sich um weniger als 2*10⁻⁶/K unterscheiden.

7. Heizungsvorrichtung nach einem der vorhergehenden Ansprüche, wobei der Grenzbereich die Diffusion von Bestandteilen des elektrokeramischen Materials und des strukturkeramischen Materials hemmt.

8. Verfahren zur Herstellung einer Heizungsvorrichtung gemäß Anspruch 1, mit den Verfahrensschritten
A) Bereitstellen eines elektrokeramischen Ausgangsmaterials,
B) Bereitstellen eines strukturkeramischen Ausgangsmaterials,
C) Herstellen eines Grünkörpers, der einen das elektrokeramische Ausgangsmaterial umfassenden ersten Bereich (10) und einen das strukturkeramische Ausgangsmaterial umfassenden zweiten Bereich (20) umfasst, und
D) Sintern des Grünkörpers zur Herstellung des Formkörpers (30), wobei das elektrokeramische Ausgangsmaterial in ein elektrokeramisches Material mit positiven Temperaturkoeffizienten des elektrischen Widerstands und aufweisend eine Perowskitstruktur überführt wird und das strukturkeramische Material in eine Oxidkeramik überführt wird und wobei erster und zweiter Bereich formschlüssig aneinander angeordnet sind.

9. Verfahren nach dem vorhergehenden Anspruch, wobei in den Verfahrensschritten A) und B) ein elektrokeramisches Ausgangsmaterial und ein strukturkeramisches Ausgangsmaterial ausgewählt werden, die Ausdehnungskoeffizienten aufweisen, die sich um weniger als 2*10⁻⁶/K unterscheiden.

10. Verfahren nach einem der Ansprüche 8 oder 9, wobei im Verfahrensschritt C) ein Formgebungsverfahren verwendet wird, das ausgewählt ist aus Spritzguss, Mehrlagenpressen und Foliengießen.

## Claims

1. Heating device for heating a medium, comprising a molded object (30), comprising
- a first region (10), which has an electroceramic material with a positive temperature coefficient of the electrical resistance and a perovskite structure, wherein the first region (10) of the molded object (30) is provided with two electrical contacting areas (40) and (45) for producing a current flow in the first region (10) of the molded object (30),
- a second region (20), which has a structural ceramic material comprising an oxide ceramic, and
- between the first region (10) and the second region (20), an interfacial region, in which the electroceramic material and the structural ceramic material are sintered to one another, wherein the first and the second region are arranged in form-fitting engagement, and wherein the first region (10) and the second region (20) are formed as a pipe and wherein the first region (10) surrounds the second region (20).

2. Heating device according to the preceding claim, wherein the electroceramic material has the structure Ba_{1-x-y}MₓD_{y}Ti_{1-a-b}NaMn_{b}O₃, where x = 0 to 0.5, y = 0 to 0.01, a = 0 to 0.01, b = 0 to 0.01, M comprises a divalent cation, D comprises a trivalent or tetravalent donor and N comprises a pentavalent or hexavalent cation.

3. Heating deivce according to one of the preceding claims, wherein the electroceramic material has a Curie temperature, which comprises a range from -30°C to 340°C.

4. Heating device according to one of the preceding claims, wherein the electroceramic material has a resistivity at 25°C which lies in a range from 3 Ωcm to 100 000 Ωcm.

5. Heating device according to one of the preceding claims, wherein the oxide ceramic is chosen from a group which comprises ZrO₂, Al₂O₃ and MgO.

6. Heating device according to one of the preceding claims, wherein the first region (10), the second region (20) and the interfacial region have coefficients of thermal expansion that differ from one another by less than 2*10⁻⁶/K.

7. Heating device according to one of the preceding claims, wherein the interfacial region inhibits the diffusion of constituents of the electroceramic material and of the structural ceramic material.

8. Method for producing a heating device according to Claim 1, with the method steps of
A) providing an electroceramic starting material,
B) providing a structural ceramic starting material,
C) producing a green body, which comprises a first region (10), comprising the electroceramic starting material, and a second region (20), comprising the structural ceramic starting material, and
D) sintering the green body to produce the molded object (30), the electroceramic starting material being transformed into an electroceramic material with a positive temperature coefficient of the electrical resistance and having a perovskite structure, and the structural ceramic material being transformed into an oxide ceramic, and wherein the first and the second region are arranged in form-fitting engagement.

9. Method according to the preceding claim, wherein, in method steps A) and B), an electroceramic starting material and a structural ceramic starting material that have coefficients of expansion which differ by less than 2*10⁻⁶/K are chosen.

10. Method according to either of Claims 8 and 9, wherein, in method step C), a molding method chosen from injection molding, multilayer extrusion and film casting is used.

## Revendications

1. Dispositif de chauffage pour chauffer un fluide, comprenant un objet moulé (30), comprenant
- une première zone (10), qui comprend un matériau électrocéramique présentant un coefficient de température positif de la résistance électrique et une structure de pérowskite, la première zone (10) de l'objet moulé (30) étant pourvue de deux contacts électriques (40) et (45) pour produire un flux de courant dans la première zone (10) de l'objet moulé (30),
- une deuxième zone (20), qui comprend un matériau céramique technique comprenant une céramique à base d'oxyde, et
- une zone limite entre la première zone (10) et la deuxième zone (20), dans laquelle le matériau électrocéramique et le matériau céramique technique sont frittés l'un avec l'autre, la première zone et la deuxième zone étant disposées en liaison avec correspondance de forme l'une avec l'autre, et la première zone (10) et la deuxième zone (20) étant configurées sous forme d'un tube, et la première zone (10) entourant la deuxième zone (20).

2. Dispositif de chauffage selon la revendication précédente, dans lequel le matériau électrocéramique présente la structure Ba_{1-x-y}MₓD_{y}Ti_{1-a-b}NₐMn_{b}O₃, dans laquelle x = 0 à 0, 5, y = 0 à 0,01, a = 0 à 0,01, b = 0 à 0,01, M comprend un cation divalent, D comprend un donneur tri- ou tétravalent, et N comprend un cation penta- ou hexavalent.

3. Dispositif de chauffage selon l'une des revendications précédentes, dans lequel le matériau électrocéramique présente une température de Curie qui comprend une plage de -30°C à 340°C.

4. Dispositif de chauffage selon l'une des revendications précédentes, dans lequel le matériau électrocéramique présente à 25°C une résistance spécifique qui est comprise dans la plage de 3 Ωcm à 100 000 Ωcm.

5. Dispositif de chauffage selon l'une des revendications précédentes, dans lequel la céramique à base d'oxyde est choisie dans un groupe qui comprend ZrO₂, Al₂O₃ et MgO.

6. Dispositif de chauffage selon l'une des revendications précédentes, dans lequel la première zone (10), la deuxième zone (20) et la zone limite présentent des coefficients de dilatation thermique qui se distinguent de moins de 2*10⁻⁶/K.

7. Dispositif de chauffage selon l'une des revendications précédentes, dans lequel la zone limite empêche la diffusion de constituants du matériau électrocéramique et du matériau céramique technique.

8. Procédé de fabrication d'un dispositif de chauffage selon la revendication 1, comprenant les étapes :
A) fourniture d'un matériau de départ électrocéramique,
B) fourniture d'un matériau de départ céramique technique,
C) fabrication d'une ébauche crue, qui comprend une première zone (10) comprenant le matériau de départ électrocéramique et une deuxième zone (20) comprenant le matériau de départ céramique technique, et
D) frittage de l'ébauche crue pour fabriquer l'objet moulé (30), le matériau de départ électrocéramique étant converti en un matériau électrocéramique présentant des coefficients de température positifs de la résistance électrique et présentant une structure de pérowskite, et le matériau céramique technique étant converti en une céramique à base d'oxyde, la première et la deuxième zones étant disposées en liaison avec correspondance de forme l'une contre l'autre.

9. Procédé selon la revendication précédente, dans lequel, dans les étapes de procédé A) et B), on choisit un matériau de départ électrocéramique et un matériau de départ céramique technique qui présentent des coefficients de dilatation qui se distinguent de moins de 2*10⁻⁶/K.

10. Procédé selon l'une des revendications 8 ou 9, dans lequel, dans l'étape de procédé C), on utilise un procédé de façonnage qui est choisi parmi le moulage par injection, le pressage multicouche et le coulage de feuilles.
